(19) 

Europäisches
Patentamt
European
Patent Office
Office européen
des brevets

(11) **EP 2 720 292 A1**

(12) **EUROPEAN PATENT APPLICATION**
published in accordance with Art. 153(4) EPC

(43) Date of publication:
**16.04.2014 Bulletin 2014/16**

(21) Application number: **12800860.4**

(22) Date of filing: **12.06.2012**

(51) Int Cl.:
*H01M 2/16* (2006.01)    *C08J 9/26* (2006.01)
*C08L 63/00* (2006.01)    *H01M 2/18* (2006.01)

(86) International application number:
**PCT/JP2012/003833**

(87) International publication number:
**WO 2012/172785 (20.12.2012 Gazette 2012/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2011 JP 2011131569**

(71) Applicant: **Nitto Denko Corporation
Osaka 567-8680 (JP)**

(72) Inventors:
• **YAMADA, Yosuke
Osaka 567-8680 (JP)**

• **NOUMI, Shunsuke
Osaka 567-8680 (JP)**
• **TAKE, Hiroyoshi
Osaka 567-8680 (JP)**

(74) Representative: **Hart-Davis, Jason et al
Cabinet Beau de Loménie
158, rue de l'Université
75340 Paris Cedex 07 (FR)**

(54) **NONAQUEOUS ELECTROLYTIC ELECTRICITY STORAGE DEVICE AND PRODUCTION METHOD THEREFOR**

(57)    The present invention provides a nonaqueous electrolyte electricity storage device including a separator that can be produced by a method in which use of a solvent that places a large load on the environment can be avoided and in which control of parameters such as the pore diameter is relatively easy, the nonaqueous electrolyte electricity storage device being capable of trapping ions of metals that tend to form a complex other than lithium. The present invention is a nonaqueous electrolyte electricity storage device including a cathode, an anode, a separator disposed between the cathode and the anode, and an electrolyte having ion conductivity. The cathode and/or the anode is formed of a material containing at least one metal element selected from the group consisting of transition metals, aluminum, tin, and silicon. The separator includes a porous epoxy resin body having a porous structure with a specific surface area of 5 to 60 $m^2$/g, and the porous epoxy resin body contains at least one amino group selected from the group consisting of a primary amino group, a secondary amino group, and a tertiary amino group.

FIG. 1

EP 2 720 292 A1

## Description

TECHNICAL FIELD

The present invention relates to a nonaqueous electrolyte electricity storage device and a production method thereof. Particularly, the present invention relates to a nonaqueous electrolyte electricity storage device including a separator for which an epoxy resin is used, and to a production method thereof.

BACKGROUND ART

The demand for nonaqueous electrolyte electricity storage devices, as typified by lithium-ion secondary batteries, lithium-ion capacitors etc., is increasing year by year against a background of various problems such as global environment conservation and depletion of fossil fuel. Porous polyolefin membranes are conventionally used as separators for nonaqueous electrolyte electricity storage devices. A porous polyolefin membrane can be produced by the method described below.

First, a solvent and a polyolefin resin are mixed and heated to prepare a polyolefin solution. The polyolefin solution is formed into a sheet shape by means of a metal mold such as a T-die, and the resultant product is discharged and cooled to obtain a sheet-shaped formed body. The sheet-shaped formed body is stretched, and the solvent is removed from the formed body. A porous polyolefin membrane is thus obtained. In the step of removing the solvent from the formed body, an organic solvent is used (see Patent Literature 1).

In the above production method, a halogenated organic compound such as dichloromethane is often used as the organic solvent. The use of a halogenated organic compound places a very large load on the environment, and thus has become a problem.

By contrast, with a method described in Patent Literature 2 (a so-called dry method), a porous polyolefin membrane can be produced without use of a solvent that places a large load on the environment. However, this method has a problem in that control of the pore diameter of the porous membrane is difficult. In addition, there is also a problem in that when a porous membrane produced by this method is used as a separator, imbalance of ion permeation is likely to occur inside an electricity storage device.

In addition, lithium-ion secondary batteries still have a problem in that reduction in capacity, deterioration in output characteristics, and reduction in safety are caused by charge and discharge repeated in an atmosphere of normal temperature or high temperature. It is known that deterioration of a battery is accompanied by elution of metal ions from the positive electrode, the current collector, or the like. For example, when Co or Mn is eluted from the positive electrode, the eluted Co or Mn is precipitated on the negative electrode. The precipitate on the negative electrode may then grow therefrom, and reach the positive electrode, thus causing short circuit. In addition, there is also a possibility that when overcharge or over-discharge of a battery occurs, the current collector is eluted, and short circuit is caused by the same mechanism. Furthermore, there is concern that the presence of metal ions other than lithium ions causes a side reaction, and thus leads to reduction in capacity (see Non Patent Literature 1).

CITATION LIST

Patent Literature

   Patent Literature 1: JP 2001-192487 A
   Patent Literature 2: JP 2000-30683 A

Non Patent Literature

Non Patent Literature 1: Pankaj Arora, Ralph E. White, Marc Doyle, "Capacity Fade Mechanisms and Side Reactions in Lithium-Ion Batteries", Journal of Electrochemical Society, Vol. 145, No. 10, October 1998

SUMMARY OF INVENTION

Technical Problem

In view of the problems of the above conventional techniques, the present invention aims to provide a nonaqueous electrolyte electricity storage device including a separator that can be produced by a method in which use of a solvent that places a large load on the environment can be avoided and in which control of parameters such as the pore diameter is relatively easy, the nonaqueous electrolyte electricity storage device being capable of trapping ions of metals that tend to form a complex other than lithium.

Solution to Problem

The present invention provides a nonaqueous electrolyte electricity storage device including: a cathode; an anode; a separator disposed between the cathode and the anode; and an electrolyte having ion conductivity. The cathode and/or the anode is formed of a material containing at least one metal element selected from the group consisting of transition metals, aluminum, tin, and silicon. The separator includes a porous epoxy resin body having a porous structure with a specific surface area of 5 to 60 $m^2/g$, and the porous epoxy resin body contains at least one amino group selected from the group consisting of a primary amino group, a secondary amino group, and a tertiary amino group.

In another aspect, the present invention provides a method for producing a nonaqueous electrolyte electricity storage device, the method including the steps of: preparing a cathode, an anode, and a separator; and assembling an electrode group from the cathode, the anode, and the separator. The step of preparing the separator includes the steps of: (i) preparing an epoxy resin composition containing an epoxy resin, an amine serving as a curing agent, and a porogen; (ii) forming a cured product of the epoxy resin composition into a sheet shape or curing a sheet-shaped formed body of the epoxy resin composition, so as to obtain an epoxy resin sheet; and (iii) removing the porogen from the epoxy resin sheet by means of a halogen-free solvent. The cathode and/or the anode is formed of a material containing at least one metal element selected from the group consisting of transition metals, aluminum, tin, and silicon. The separator includes a porous epoxy resin body having a porous structure with a specific surface area of 5 to 60 $m^2/g$, and the porous epoxy resin body contains at least one amino group selected from the group consisting of a primary amino group, a secondary amino group, and a tertiary amino group.

Advantageous Effects of Invention

In the case of the nonaqueous electrolyte electricity storage device of the present invention, the separator can be produced by removing a porogen from an epoxy resin sheet by means of a halogen-free solvent. Therefore, in the production of the separator, the use of a solvent that places a large load on the environment can be avoided. In addition, since the separator can be produced from an epoxy resin sheet containing a porogen, parameters such as the pore diameter can be controlled relatively easily in the production of the separator. Furthermore, the separator of the present invention for nonaqueous electrolyte electricity storage devices does not trap Li ions in an electricity storage device, but can selectively trap ions of metals, such as transition metals (e.g., Co, Mn, Cu), Al, Sn, and Si, which tend to form a complex. Accordingly, a nonaqueous electrolyte electricity storage device using the separator is less adversely affected by ions of metals, such as transition metals (e.g., Co, Mn, Cu), Al, Sn, and Si, which tend to form a complex.

BRIEF DESCRIPTION OF DRAWINGS

FIG. 1 is a schematic cross-sectional view of a nonaqueous electrolyte electricity storage device according to one embodiment of the present invention.
FIG. 2 is a schematic diagram showing a cutting step.
FIG. 3 is a TEM image of a porous epoxy resin membrane of Example 1.
FIG. 4 is an EDX spectrum of a portion C in the TEM image of FIG. 3.
FIG. 5 is an EDX spectrum of a portion D in the TEM image of FIG. 3.

DESCRIPTION OF EMBODIMENT

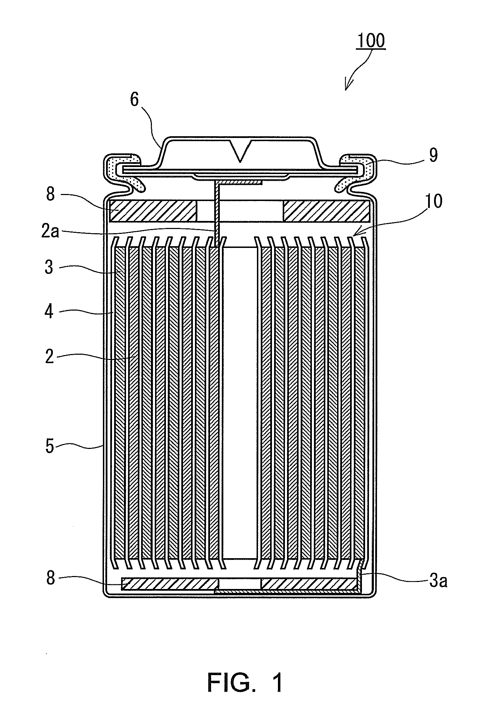

Next, one embodiment of the present invention will be described with reference to the accompanying drawings.
As shown in FIG. 1, a nonaqueous electrolyte electricity storage device 100 according to the present embodiment includes a cathode 2, an anode 3, a separator 4, and a case 5. The separator 4 is disposed between the cathode 2 and the anode 3. The cathode 2, the anode 3, and the separator 4 are wound together to form an electrode group 10 as an electricity generating element. The electrode group 10 is contained in the case 5 having a bottom. The electricity storage device 100 is typically a lithium-ion secondary battery.
In the present embodiment, the case 5 has a hollow-cylindrical shape. That is, the electricity storage device 100 has a hollow-cylindrical shape. However, the shape of the electricity storage device 100 is not particularly limited. For example, the electricity storage device 100 may have a flat rectangular shape. In addition, the electrode group 10 need not have a wound structure. A plate-shaped electrode group may be formed by simply stacking the cathode 2, the separator 4, and the anode 3. The case 5 is made of a metal such as stainless steel or aluminum. Furthermore, the electrode group 10 may be contained in a case made of a material having flexibility. The material having flexibility is composed of, for example, an aluminum foil and resin films attached to both surfaces of the aluminum foil.

The electricity storage device 100 further includes a cathode lead 2a, an anode lead 3a, a cover 6, a packing 9, and two insulating plates 8. The cover 6 is fixed at an opening of the case 5 via the packing 9. The two insulating plates 8 are disposed above and below the electrode group 10, respectively. The cathode lead 2a has one end connected electrically to the cathode 2 and the other end connected electrically to the cover 6. The anode lead 3a has one end connected electrically to the anode 3 and the other end connected electrically to the bottom of the case 5. The inside of the electricity storage device 100 is filled with a nonaqueous electrolyte (typically, a nonaqueous electrolyte solution) having ion conductivity. The nonaqueous electrolyte is impregnated into the electrode group 10. This makes it possible for ions (typically, lithium ions) to move between the cathode 2 and the anode 3 through the separator 4.

The cathode 2 can be composed of a cathode active material capable of absorbing and releasing lithium ions, a binder, and a current collector. For example, a cathode active material is mixed with a solution containing a binder to prepare a composite agent, the composite agent is applied to a cathode current collector and then dried, and thus the cathode 2 can be fabricated.

As the cathode active material, a commonly-known material used as a cathode active material for a lithium-ion secondary battery can be used. Specifically, a lithium-containing transition metal oxide, a lithium-containing transition metal phosphate, a chalcogen compound, or the like, can be used as the cathode active material. Examples of the lithium-containing transition metal oxide include $LiCoO_2$, $LiMnO_2$, $LiNiO_2$, and substituted compounds thereof in which part of the transition metal is substituted by another metal. Examples of the lithium-containing transition metal phosphate include $LiFePO_4$, and a substituted compound of $LiFePO_4$ in which part of the transition metal (Fe) is substituted by another metal. Examples of the chalcogen compound include titanium disulfide and molybdenum disulfide.

A commonly-known resin can be used as the binder. Examples of resins which can be used as the binder include: fluorine-based resins such as polyvinylidene fluoride (PVDF), hexafluoropropylene, and polytetrafluoroethylene; hydrocarbon-based resins such as styrene-butadiene rubbers and ethylene-propylene terpolymer; and mixtures thereof. Conductive powder such as carbon black may be contained in the cathode 2 as a conductive additive.

A metal material excellent in oxidation resistance, for example, aluminum processed into the form of foil or mesh, can be suitably used as the cathode current collector.

The anode 3 can be composed of an anode active material capable of absorbing and releasing lithium ions, a binder, and a current collector. The anode 3 can also be fabricated by the same method as that for the cathode 2. The same binder as used for the cathode 2 can be used for the anode 3.

As the anode active material, a commonly-known material used as an anode active material for a lithium-ion secondary battery can be used. Specifically, a carbon-based active material, an alloy-based active material that can form an alloy with lithium, a lithium-titanium composite oxide (e.g., $Li_4Ti_5O_{12}$), or the like, can be used as the anode active material. Examples of the carbon-based active material include: calcined products of coke, pitch, phenolic resins, polyimides, cellulose etc.; artificial graphite; and natural graphite. Examples of the alloy-based active material include aluminum, tin, tin compounds, silicon, and silicon compounds.

A metal material excellent in reduction stability, for example, copper or a copper alloy processed into the form of foil or mesh, can be suitably used as the anode current collector. In the case where a high-potential anode active material such as a lithium-titanium composite oxide is used, aluminum processed into the form of foil or mesh can also be used as the anode current collector.

In the present embodiment, the cathode and/or the anode is formed of a material containing at least one metal element selected from the group consisting of transition metals, aluminum, tin, and silicon. Preferably, the cathode and/or the anode is formed of a material containing at least one metal element selected from the group consisting of manganese, nickel, cobalt, iron, copper, and aluminum. Therefore, for example, one or more of the cathode active material, the cathode current collector, the anode active material, and the anode current collector are formed of a material containing at least one metal element selected from the group consisting of transition metals, aluminum, tin, and silicon.

The nonaqueous electrolyte solution typically contains a nonaqueous solvent and an electrolyte. Specifically, an electrolyte solution obtained by dissolving a lithium salt (electrolyte) in a nonaqueous solvent can be suitably used. In addition, a gel electrolyte containing a nonaqueous electrolyte solution, a solid electrolyte obtained by dissolving and decomposing a lithium salt in a polymer such as polyethylene oxide, or the like, can also be used as the nonaqueous electrolyte. Examples of the lithium salt include lithium tetrafluoroborate ($LiBF_4$), lithium hexafluorophosphate ($LiPF_6$), lithium perchlorate ($LiClO_4$), and lithium trifluoromethanesulfonate ($LiCF_3SO_3$). Examples of the nonaqueous solvent include propylene carbonate (PC), ethylene carbonate (EC), methyl ethyl carbonate (MEC), 1,2-dimethoxyethane (DME), $\gamma$-butyrolactone ($\gamma$-BL), and mixtures thereof.

Next, the separator 4 will be described in detail.

The separator 4 includes a porous epoxy resin body having a porous structure with a specific surface area of 5 to 60 m²/g, and the porous epoxy resin body contains at least one amino group selected from the group consisting of a primary amino group, a secondary amino group, and a tertiary amino group.

Regarding that the porous epoxy resin body contains at least one amino group selected from the group consisting of a primary amino group, a secondary amino group, and a tertiary amino group, it is inferred that the N atom of the amino group selectively traps ions of metals, such as transition metals (e.g., Co, Mn, Cu), Al, Sn, and Si, which are generated in the electricity storage device and tend to form a complex, but does not trap lithium ions in the battery. Since the porous epoxy resin body has a porous structure with a specific surface area of 5 to 60 m²/g, the surface area of the separator 4 over which the electrolyte solution contacts with the separator 4 is large, and the efficiency of trapping metal ions that tend to form a complex is particularly increased. Consequently, it is possible to reduce the adverse effect on the electricity storage device 100 caused by metal ions that tend to form a complex. Such a function significantly reduces the undesirable possibility of short circuit or side reaction, and is expected to increase the lifetime of the electricity storage device.

Here, it is also conceivable to use a chelate agent for trapping metal ions that tend to form a complex. However, there is concern that the chelate agent causes side reaction at the electrodes. Therefore, the fact that the separator has the function of trapping metal ions that tend to form a complex as in the present invention is advantageous in terms of non-occurrence of deterioration of the electrodes and in terms of the energy density of the electricity storage device.

The porous epoxy resin body can be produced by causing an epoxy resin to be three-dimensionally cross-linked using a curing agent. The method for introducing the aforementioned amino group into the porous body may be to use an epoxy resin containing an amino group or to use a curing agent containing an amino group. Among these, the latter method is preferable. That is, the porous epoxy resin body is preferably a cured product obtained by curing an epoxy resin using an amine as a curing agent. Specific examples of the epoxy resin and the amine will be described later.

The average pore diameter of the porous epoxy resin body is preferably 0.05 to 0.5 $\mu$m. When the average pore diameter is within this range, a porous structure with a specific surface area of 5 to 60 m²/g can easily be obtained. In addition, the porosity is preferably within the range of 20 to 80% from the standpoint of the function as the separator.

The porosity can be measured by the following method. First, an object to be measured is cut into predetermined dimensions (e.g., a circle having a diameter of 6 cm), and the volume and weight are determined. The obtained results are substituted into the following expression to calculate the porosity.

$$\text{Porosity (\%)} = 100 \times (V - (W/D))/V$$

V: Volume (cm³)
W: Weight (g)
D: Average density of components (g/cm³)

The average pore diameter can be determined by observing a cross-section of the separator 4 with a scanning electron microscope. Specifically, pore diameters are determined through image processing of each of the pores present within a visual-field width of 60 $\mu$m and within a predetermined depth from the surface (e.g., 1/5 to 1/100 of the thickness of the separator 4), and the average value of the pore diameters can be determined as the average pore diameter. The image processing can be executed by means of, for example, a free software "Image J" or "Photoshop" manufactured by Adobe Systems Incorporated.

The specific surface area can be determined by a nitrogen adsorption BET method in accordance with JIS Z 8830.

Adjacent pores may communicate with each other so that ions can move between the front surface and the back surface of the separator 4, i.e., so that ions can move between the cathode 2 and the anode 3.

The separator 4 has a thickness in the range of, for example, 5 to 50 $\mu$m. If the separator 4 is too thick, it becomes difficult for ions to move between the cathode 2 and the anode 3. Although it is possible to produce the separator 4 having a thickness less than 5 $\mu$m, the thickness is preferably 5 $\mu$m or more, and particularly preferably 10 $\mu$m or more, in order to ensure reliability of the electricity storage device 100.

In addition, the separator 4 may have an air permeability (Gurley value) in the range of, for example, 1 to 1000 seconds/100 cm³, in particular, 10 to 1000 seconds/100 cm³. If the separator 4 has an air permeability within such a range, ions can easily move between the cathode 2 and the anode 3. The air permeability can be measured according to the method specified in Japanese Industrial Standards (JIS) P 8117.

Next, the method for producing the porous epoxy resin body (porous epoxy resin membrane in the present embodiment) used for the separator 4 will be described.

For example, the porous epoxy resin membrane can be produced by any of the following methods (a), (b), and (c). The methods (a) and (b) are the same in that an epoxy resin composition is formed into a sheet shape, and then a curing step is carried out. The method (c) is characterized in that a block-shaped cured product of an epoxy resin is made, and the cured product is formed into a sheet shape.

Method (a)

An epoxy resin composition containing an epoxy resin, an amine serving as a curing agent, and a porogen, is applied onto a substrate so that a sheet-shaped formed body of the epoxy resin composition is obtained. Subsequently, the sheet-shaped formed body of the epoxy resin composition is heated to cause the epoxy resin to be three-dimensionally cross-linked. At this time, a bicontinuous structure is formed as a result of phase separation between the cross-linked epoxy resin and the porogen. Subsequently, the obtained epoxy resin sheet is washed to remove the porogen, and is then dried to obtain a porous epoxy resin membrane having a three-dimensional network structure and pores communicating with each other. The type of the substrate is not particularly limited. A plastic substrate, a glass substrate, a metal plate, or the like, can be used as the substrate.

Method (b)

An epoxy resin composition containing an epoxy resin, an amine serving as a curing agent, and a porogen, is applied onto a substrate. Subsequently, another substrate is placed onto the applied epoxy resin composition to fabricate a sandwich-like structure. Spacers (e.g., double-faced tapes) may be provided at four corners of the substrate in order to keep a certain space between the substrates. Next, the sandwich-like structure is heated to cause the epoxy resin to be three-dimensionally cross-linked. At this time, a bicontinuous structure is formed as a result of phase separation between the cross-linked epoxy resin and the porogen. Subsequently, the obtained epoxy resin sheet is taken out, washed to remove the porogen, and then dried to obtain a porous epoxy resin membrane having a three-dimensional network structure and pores communicating with each other. The type of the substrate is not particularly limited. A plastic substrate, a glass substrate, a metal plate, or the like, can be used as the substrate. In particular, a glass substrate can be suitably used.

Method (c)

An epoxy resin composition containing an epoxy resin, an amine serving as a curing agent, and a porogen, is filled into a metal mold having a predetermined shape. Subsequently, the epoxy resin is caused to be three-dimensionally cross-linked to fabricate a hollow-cylindrical or solid-cylindrical cured product of the epoxy resin composition. At this time, a bicontinuous structure is formed as a result of phase separation between the cross-linked epoxy resin and the porogen. Subsequently, the surface portion of the cured product of the epoxy resin composition is cut at a predetermined thickness while rotating the cured product about the hollow cylinder axis or solid cylinder axis, to fabricate an epoxy resin sheet having a long strip shape. Then, the epoxy resin sheet is washed to remove the porogen contained in the sheet, and is then dried to obtain a porous epoxy resin membrane having a three-dimensional network structure and pores communicating with each other.

The method (c) will be described in detail. The step of preparing an epoxy resin composition, the step of curing an epoxy resin, the step of removing a porogen, and the like, are the same among all the methods. In addition, usable materials are also the same among all the methods.

With the method (c), a porous epoxy resin membrane can be produced through the following main steps.

(i) Preparing an epoxy resin composition.
(ii) Forming a cured product of the epoxy resin composition into a sheet shape.
(iii) Removing a porogen from the epoxy resin sheet.

First, an epoxy resin composition containing an epoxy resin, an amine serving as a curing agent, and a porogen (micropore-forming agent), is prepared. Specifically, a homogeneous solution is prepared by dissolving an epoxy resin and a curing agent in a porogen.

As the epoxy resin, either an aromatic epoxy resin or a non-aromatic epoxy resin can be used. Examples of the aromatic epoxy resin include polyphenyl-based epoxy resins, epoxy resins containing a fluorene ring, epoxy resins containing triglycidyl isocyanurate, and epoxy resins containing a heteroaromatic ring (e.g., a triazine ring). Examples of polyphenyl-based epoxy resins include bisphenol A-type epoxy resins, brominated bisphenol A-type epoxy resins, bisphenol F-type epoxy resins, bisphenol AD-type epoxy resins, stilbene-type epoxy resins, biphenyl-type epoxy resins, bisphenol A novolac-type epoxy resins, cresol novolac-type epoxy resins, diaminodiphenylmethane-type epoxy resins, and tetrakis(hydroxyphenyl)ethane-based epoxy resins. Examples of non-aromatic epoxy resins include aliphatic glycidyl ether-type epoxy resins, aliphatic glycidyl ester-type epoxy resins, cycloaliphatic glycidyl ether-type epoxy resins, cycloaliphatic glycidyl amine-type epoxy resins, and cycloaliphatic glycidyl ester-type epoxy resins. These may be used singly, or two or more thereof may be used in combination.

Among these, at least one that is selected from the group consisting of bisphenol A-type epoxy resins, brominated bisphenol A-type epoxy resins, bisphenol F-type epoxy resins, bisphenol AD-type epoxy resins, epoxy resins containing a fluorene ring, epoxy resins containing triglycidyl isocyanurate, cycloaliphatic glycidyl ether-type epoxy resins, cycloaliphatic glycidyl amine-type epoxy resins, and cycloaliphatic glycidyl ester-type epoxy resins, and that has an epoxy equivalent of 6000 or less and a melting point of 170°C or lower, can be suitably used. The use of these epoxy resins allows formation of a uniform three-dimensional network structure and uniform pores, and also allows excellent chemical resistance and high strength to be imparted to the porous epoxy resin membrane.

As the amine serving as a curing agent, either an aromatic amine or a non-aromatic amine can be used. Examples of the aromatic amine include aromatic amines (e.g., meta-phenylenediamine, diaminodiphenylmethane, diaminodiphenyl sulfone, benzyldimethylamine, and dimethylaminomethylbenzene), and amines containing a heteroaromatic ring (e.g., amines containing a triazine ring). Examples of the non-aromatic amine include aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (e.g., isophoronediamine, menthanediamine, N-aminoethylpiperazine, an adduct of 3,9-bis(3-aminopropyl)2,4,8,10-tetraoxaspiro(5, 5)undecane, bis(4-amino-3-methylcyclohexyl)methane, bis(4-aminocyclohexyl)methane, and modified products thereof), and aliphatic polyamidoamines containing polyamines and dimer acids. These may be used singly, or two or more thereof may be used in combination.

Among the amines mentioned above as examples, an amine compound having two or more primary amines per molecule can be suitably used. Specifically, at least one selected from the group consisting of meta-phenylenediamine, diaminodiphenylmethane, diaminodiphenyl sulfone, polymethylenediamine, bis(4-amino-3-methylcyclohexyl)methane, and bis(4-aminocyclohexyl)methane, can be suitably used. The use of these amine compounds allows formation of a uniform three-dimensional network structure and uniform pores, and also allows high strength and appropriate elasticity to be imparted to the porous epoxy resin membrane.

A preferred combination of an epoxy resin and an amine is a combination of an aromatic epoxy resin and an aliphatic amine, a combination of an aromatic epoxy resin and a cycloaliphatic amine, or a combination of a cycloaliphatic epoxy resin and an aromatic amine. These combinations allow excellent heat resistance to be imparted to the porous epoxy resin membrane.

The porogen can be a solvent capable of dissolving the epoxy resin and the curing agent. The porogen is used also as a solvent that can cause reaction-induced phase separation after the epoxy resin and the curing agent are polymerized. Specific examples of substances which can be used as the porogen include cellosolves such as methyl cellosolve and ethyl cellosolve, esters such as ethylene glycol monomethyl ether acetate and propylene glycol monomethyl ether acetate, glycols such as polyethylene glycol and polypropylene glycol, and ethers such as polyoxyethylene monomethyl ether and polyoxyethylene dimethyl ether. These may be used singly, or two or more thereof may be used in combination.

Among these, at least one selected from the group consisting of methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, and polyoxyethylene dimethyl ether, can be suitably used. In particular, at least one selected from the group consisting of polyethylene glycol having a molecular weight of 200 or less, polypropylene glycol having a molecular weight of 500 or less, polyoxyethylene monomethyl ether, and propylene glycol monomethyl ether acetate, can be suitably used. The use of these porogens allows formation of a uniform three-dimensional network structure and uniform pores. These may be used singly, or two or more thereof may be used in combination.

In addition, a solvent in which a reaction product of the epoxy resin and the curing agent is soluble can be used as the porogen even if the epoxy resin or the curing agent is individually insoluble or poorly-soluble in the solvent at normal temperature. Examples of such a porogen include a brominated bisphenol A-type epoxy resin ("Epicoat 5058" manufactured by Japan Epoxy Resin Co., Ltd).

The porosity, the average pore diameter, and the pore diameter distribution of the porous epoxy resin membrane vary depending on the types of the materials, the blending ratio of the materials, and reaction conditions (e.g., heating temperature and heating time at the time of reaction-induced phase separation). The specific surface area of the porous epoxy resin membrane varies depending on the porosity, the average pore diameter, and the pore diameter distribution. Accordingly, in order to obtain the intended porosity, average pore diameter, pore diameter distribution, and specific surface area, optimal conditions are preferably selected. In addition, by control of the molecular weight of the cross-linked epoxy resin, the molecular weight distribution, the viscosity of the solution, the cross-linking reaction rate etc. at the time of phase separation, a bicontinuous structure of the cross-linked epoxy resin and the porogen can be fixed in a particular state, and thus a stable porous structure can be obtained. When the average pore diameter of the porous epoxy resin body is adjusted to 0.05 to 0.5 $\mu$m, a porous structure with a specific surface area of 5 to 60 $m^2$/g can easily be obtained.

For example, the blending ratio of the curing agent to the epoxy resin is such that the curing agent equivalent is 0.6 to 1.5 per one epoxy group equivalent. An appropriate curing agent equivalent contributes to improvement in the characteristics of the porous epoxy resin membrane, such as the heat resistance, the chemical durability, and the mechanical characteristics.

In order to obtain an intended porous structure, a curing accelerator may be added to the solution in addition to the curing agent. Examples of the curing accelerator include tertiary amines such as triethylamine and tributylamine, and imidazoles such as 2-phenol-4-methylimidazole, 2-ethyl-4-methylimidazole, and 2-phenol-4,5-dihydroxyimidazole.

For example, 40 to 80% by weight of the porogen can be used relative to the total weight of the epoxy resin, the curing agent, and the porogen. The use of an appropriate amount of the porogen allows formation of a porous epoxy resin membrane having the desired porosity, average pore diameter, and air permeability.

One example of the method for adjusting the average pore diameter of the porous epoxy resin membrane within a desired range is to mix and use two or more types of epoxy resins having different epoxy equivalents. At this time, the difference between the epoxy equivalents is preferably 100 or more, and an epoxy resin which is liquid at normal temperature and an epoxy resin which is solid at normal temperature are mixed and used in some cases.

Next, a cured product of the epoxy resin composition is fabricated from the solution containing the epoxy resin, the curing agent, and the porogen. Specifically, the solution is filled into a metal mold, and heated as necessary. A cured product having a predetermined shape can be obtained by causing the epoxy resin to be three-dimensionally cross-linked. At this time, a bicontinuous structure is formed as a result of phase separation between the cross-linked epoxy resin and the porogen.

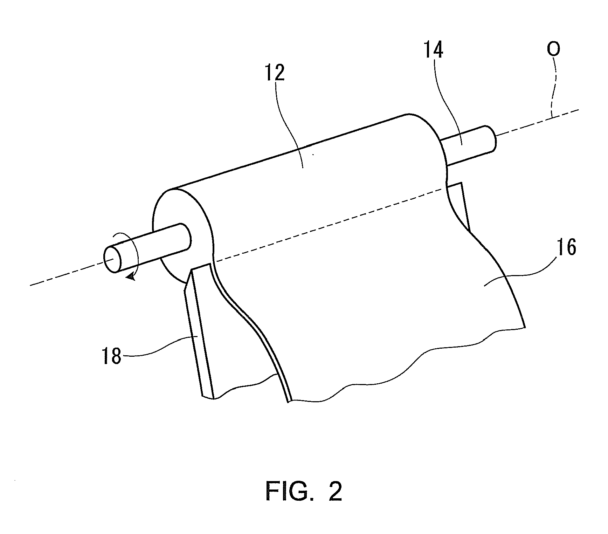

The shape of the cured product is not particularly limited. If a solid-cylindrical or hollow-cylindrical metal mold is used, a cured product having a hollow-cylindrical or solid-cylindrical shape can be obtained. In the case of a cured product having a hollow-cylindrical or solid-cylindrical shape, the cutting step described later (see FIG. 2) is easy to carry out.

The dimensions of the cured product are not particularly limited. In the case where the cured product has a hollow-cylindrical or solid-cylindrical shape, the diameter of the cured product is, for example, 20 cm or more, and preferably 30 to 150 cm, from the standpoint of the production efficiency of the porous epoxy resin membrane. The length (in the axial direction) of the cured product can also be set as appropriate taking into account the dimensions of the porous epoxy resin membrane to be obtained. The length of the cured product is, for example, 20 to 200 cm. From the standpoint of handleability, the length is preferably 20 to 150 cm, and more preferably 20 to 120 cm.

Next, the cured product is formed into a sheet shape. The cured product having a hollow-cylindrical or solid-cylindrical shape can be formed into a sheet shape by the following method. Specifically, a cured product 12 is mounted on a shaft 14 as shown in FIG. 2. The surface portion of the cured product 12 is cut (sliced) at a predetermined thickness by means of a cutting blade 18 (slicer) so that an epoxy resin sheet 16 having a long strip shape is obtained. More specifically, the surface portion of the cured product 12 is skived while the cured product 12 is being rotated about a hollow cylinder axis O (or solid cylinder axis) of the cured product 12 relative to the cutting blade 18. With this method, the epoxy resin sheet 16 can be efficiently fabricated.

The line speed during cutting of the cured product 12 is in the range of, for example, 2 to 70 m/min. The thickness of the epoxy resin sheet 16 is determined depending on the intended thickness (5 to 50 $\mu$m) of the porous epoxy resin membrane. Removal of the porogen and the subsequent drying slightly reduce the thickness. Therefore, the epoxy resin sheet 16 generally has a thickness slightly greater than the intended thickness of the porous epoxy resin membrane. The length of the epoxy resin sheet 16 is not particularly limited. From the standpoint of the production efficiency of the epoxy resin sheet 16, the length is, for example, 100 m or more, and preferably 1000 m or more.

Finally, the porogen is extracted and removed from the epoxy resin sheet 16. Specifically, the porogen can be removed from the epoxy resin sheet 16 by immersing the epoxy resin sheet 16 in a halogen-free solvent. Thus, the porous epoxy resin membrane which is usable as the separator 4 can be obtained.

As the halogen-free solvent for removing the porogen from the epoxy resin sheet 16, at least one selected from the group consisting of water, DMF (N,N-dimethylformamide), DMSO (dimethylsulfoxide), and THF (tetrahydrofuran), can be used depending on the type of the porogen. In addition, a supercritical fluid of water, carbon dioxide, or the like, can also be used as the solvent for removing the porogen. In order to actively remove the porogen from the epoxy resin sheet 16, ultrasonic washing may be performed, or the solvent may be heated and then used.

The type of a washing device for removing the porogen is not particularly limited either, and a commonly-known washing device can be used. In the case where the porogen is removed by immersing the epoxy resin sheet 16 in the solvent, a multi-stage washer having a plurality of washing tanks can be suitably used. The number of stages of washing is more preferably three or more. In addition, washing by means of counterflow which substantially corresponds to multi-stage washing may be performed. Furthermore, the temperature or the type of the solvent may be changed for each stage of washing.

After removal of the porogen, the porous epoxy resin membrane is subjected to a drying process. The conditions for drying are not particularly limited. The temperature is generally about 40 to 120°C, and preferably about 50 to 100°C. The drying time is about 10 seconds to 5 minutes. For the drying process, a dryer can be used that employs a commonly-known sheet drying method, such as a tenter method, a floating method, a roll method, or a belt method. A plurality of drying methods may be combined.

With the method of the present embodiment, the porous epoxy resin membrane which is usable as the separator 4 can be produced very easily. Since some step such as a stretching step required for production of conventional porous polyolefin membranes can be omitted, the porous epoxy resin membrane can be produced with high productivity. In addition, since a conventional porous polyolefin membrane is subjected to high temperature and high shear force during the production process, an additive such as an antioxidant needs to be used. By contrast, with the method of the present embodiment, the porous epoxy resin membrane can be produced without being subjected to high temperature and high shear force. Therefore, the need for use of an additive such as an antioxidant as contained in a conventional porous polyolefin membrane can be eliminated. Furthermore, since low-cost materials can be used as the epoxy resin, the curing agent, and the porogen, the production cost of the separator 4 can be reduced.

The separator 4 may consist only of the porous epoxy resin membrane, or may be composed of a stack of the porous epoxy resin membrane and another porous material. Examples of the other porous material include porous polyolefin membranes such as porous polyethylene membranes and porous polypropylene membranes, porous cellulose membranes, and porous fluorine resin membranes. The other porous material may be provided on only one surface or both surfaces of the porous epoxy resin membrane.

Also, the separator 4 may be composed of a stack of the porous epoxy resin membrane and a reinforcing member. Examples of the reinforcing member include woven fabrics and non-woven fabrics. The reinforcing member may be provided on only one surface or both surfaces of the porous epoxy resin membrane.

The separator 4 is prepared in the above manner, and the cathode 2 and the anode 3 are further prepared. Then, an electrode group is assembled from these components according to an ordinary method. Thus, the nonaqueous electrolyte electricity storage device 100 can be produced.

Examples

Hereinafter, the present invention will be described in more detail using an example. However, the present invention is not limited to the example.

[Example 1]

A mold release agent (QZ-13 manufactured by Nagase ChemteX Corporation) was applied thinly to the inner side of a hollow-cylindrical stainless steel container having dimensions of $\phi$120 mm $\times$ 150 mm, and the container was dried in a dryer set at 80°C.

In a hollow-cylindrical poly-container of 10L, 3126.9 g of a bisphenol A-type epoxy resin (jER 828 manufactured by Mitsubishi Chemical Corporation) and 94.6 g of 1,6-diaminohexane (special grade, manufactured by Tokyo Chemical Industry Co., Ltd.) were dissolved in 5400 g of polypropylene glycol (SANNIX PP-400 manufactured by Sanyo Chemical Industries, Ltd.). Thus, an epoxy resin/amine/ polypropylene glycol solution was prepared. Thereafter, 380 g of the diaminohexane was added to the poly-container. Subsequently, using a planetary centrifugal mixer, vacuum defoaming was performed at about 0.7 kPa while stirring was concurrently performed at a revolution speed of 500 rpm for 10 minutes under the conditions that the rotation/revolution ratio was 3/4. This stirring and defoaming process was repeated four times, and then stirring was performed once at a revolution speed of 500 rpm for 5 minutes. The temperature of the solution was increased by the stirring, and was 58.9°C immediately after the stirring.

Thereafter, an epoxy resin block was taken from the poly-container, and was continuously sliced at a thickness of 30 $\mu$m using a cutting lathe to obtain an epoxy resin sheet. A process of immersing the epoxy resin sheet in a mixed solvent of RO water and DMF (1:1, v/v) for 10 minutes was repeated three times, and then 10-minute immersion only in RO water was repeated twice to remove polypropylene glycol. Thereafter, drying at 80°C was performed for 2 hours, and thus a porous epoxy resin membrane was obtained.

(1) Porosity

The porosity of the porous membrane of Example 1 was calculated according to the method described in the above embodiment. In order to calculate the porosity of Example 1, the same epoxy resin and the amine (curing agent) as used for fabricating the porous membrane of Example were used to fabricate a non-porous body of the epoxy resin. The specific gravity of the non-porous body was used as an average density D. The result is shown in Table 1.

(2) Air permeability

The air permeability (Gurley value) of the porous membrane of Example 1 was measured according to the method specified in Japanese Industrial Standards (JIS) P 8117. The result is shown in Table 1. In order to exclude the influence of the membrane thickness (d: in units of $\mu$m), the Gurley value is represented by a value resulting from "measured value $\times$ (20/d)".

(3) Specific surface area

A BET specific surface area was determined by $N_2$ gas adsorption method using Shimadzu Micromeritics ASAP-2400 (manufactured by Shimadzu Corporation) in accordance with Japanese Industrial Standards (JIS) Z 8830. Specifically, about 0.4 g of the sample of Example 1 was cut into a short strip shape, and the strip-shaped sample was folded and placed in a large-capacity cell. Subsequently, the sample was subjected to degassing treatment (reduced-pressure drying) in the pretreatment section of the aforementioned apparatus at about 80°C for about 15 hours, and then the measurement was carried out. The result is shown in Table 1.

[Fabrication of lithium secondary battery]

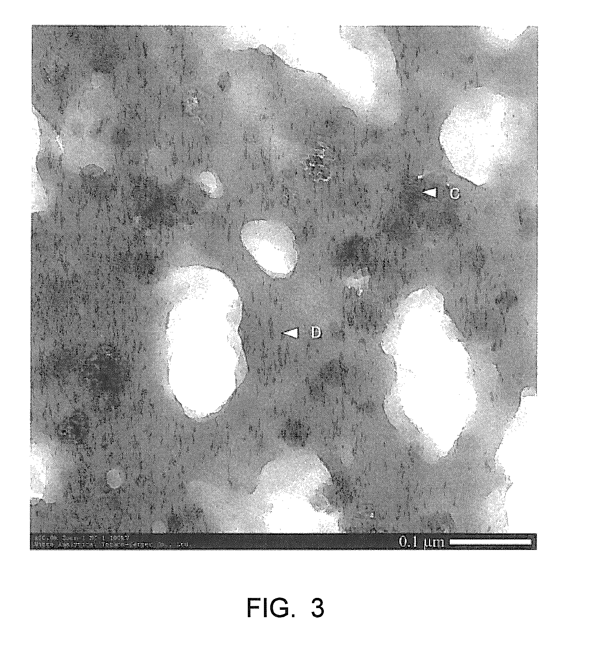

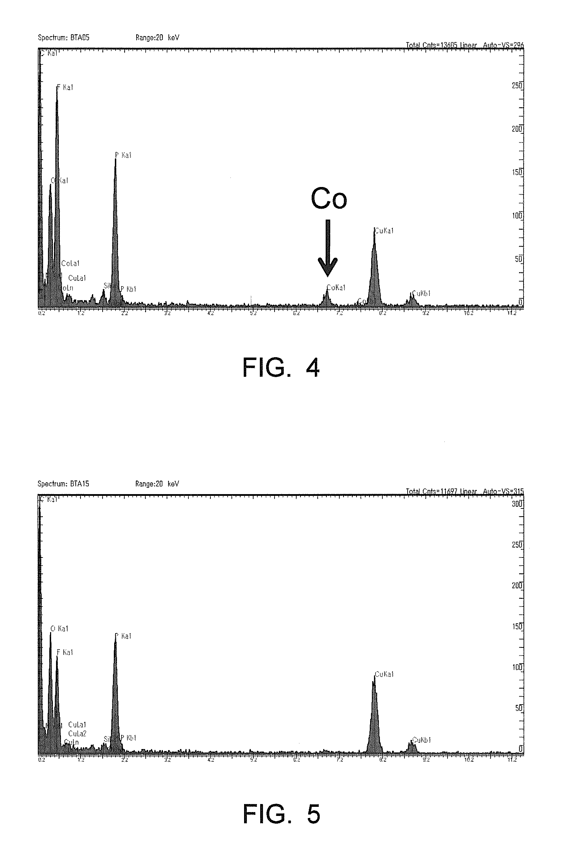

Next, a lithium-ion secondary battery of Example 1 was fabricated using the porous epoxy resin membrane of Example 1 as a separator according to the method described below.
Mixed were 89 parts by weight of lithium cobalt oxide (Cellseed C-10 manufactured by Nippon Chemical Industrial Co., Ltd.), 10 parts by weight of acetylene black (Denka Black manufactured by Denki Kagaku Kogyo K.K.), and 5 parts by weight of PVDF (KF Polymer L#1120 manufactured by Kureha Chemical Industries Co., Ltd.). N-methyl-2-pyrrolidone was then added so that the solid content concentration was 15% by weight, and thereby a slurry for a cathode was obtained. Onto an aluminum foil (current collector) having a thickness of 20 $\mu$m, the slurry was applied with a thickness of 200 $\mu$m. The coating was dried under vacuum at 80°C for 1 hour and at 120°C for 2 hours, and then was compressed by roll pressing. A cathode having a cathode active material layer with a thickness of 100 $\mu$m was thus obtained.
Mixed were 80 parts by weight of mesocarbon microbead (MCMB6-28 manufactured by Osaka Gas Chemicals Co., Ltd.), 10 parts by weight of acetylene black (Denka Black manufactured by Denki Kagaku Kogyo K.K.), and 10 parts by weight of PVDF (KF Polymer L#1120 manufactured by Kureha Chemical Industries Co., Ltd.). N-methyl-2-pyrrolidone was then added so that the solid content concentration was 15% by weight, and thereby a slurry for an anode was obtained. Onto a copper foil (current collector) having a thickness of 20 $\mu$m, the slurry was applied with a thickness of 200 $\mu$m. The coating was dried under vacuum at 80°C for 1 hour and at 120°C for 2 hours, and then was compressed by roll pressing. An anode having an anode active material layer with a thickness of 100 $\mu$m was thus obtained.
Next, an electrode group was assembled from the cathode, the anode, and the separator. Specifically, the electrode group was obtained by stacking the cathode, the porous epoxy resin membrane (separator) of Example 1, and the anode. The electrode group was placed in an aluminum-laminated package, and then an electrolyte solution was injected into the package. The electrolyte solution used was a solution prepared by dissolving $LiPF_6$ at a concentration of 1.4 mol/liter in a solvent that contains ethylene carbonate and diethyl carbonate at a volume ratio of 1:2. The package was finally sealed to obtain the lithium-ion secondary battery of Example 1.
The battery of Example 1 was charged and discharged at a temperature of 25°C. The charging was constant-current charge with a current of 0.2 CmA until the voltage reached 4.2 V, and was then switched to constant-voltage charge. The discharging was constant-current discharge with a current of 0.2 CmA, and the cut-off voltage was set at 2.75 V The charge and discharge of the battery were repeated twice. Thereafter, the battery was continuously charged at a temperature of 25°C for 20 hours with a constant current of 0.2 CmA and then with a constant voltage of 4.2 V Next, the battery was retained in a constant-temperature chamber having a temperature 80°C for two weeks while the fully-charged state was being kept.
Next, the battery of Example 1 was disassembled in a glove box (dew point: -70°C), and the separator was removed. The separator removed was washed with ethyl methyl carbonate. The separator having been washed was taken out from the glove box.
Subsequently, the separator was embedded in an epoxy resin, and then a cross-section prepared by ultrathin sectioning was subjected to TEM observation (performed using H-7650 manufactured by Hitachi High-Technologies Corporation at an accelerating voltage of 100 kV) and to energy dispersive X-ray analysis (EDX analysis performed using HF-2000 manufactured by Hitachi High-Technologies Corporation at an accelerating voltage of 200 kV). The TEM observation grid used for the EDX analysis was made of Cu. The result of the TEM observation is shown in FIG. 3, and the results of the EDX analysis are shown in FIGS. 4 and 5.

[Table 1]

|  | Thickness (μm) | Porosity (%) | Gurley value [sec/dL/20 μm] | Specific surface area (m²/g) | Cobalt ion peak in EDX analysis |
|---|---|---|---|---|---|
| Example 1 | 28.1 | 53 | 71.8 | 27.9 | Appeared |

In the TEM image of FIG. 3, a black portion (portion C in FIG. 3) and a gray portion (portion D in FIG. 3) were observed. In the EDX analysis performed for these portions, a peak derived from cobalt ions was observed in the portion C (FIG. 4), while a peak derived from cobalt ions was not observed in the portion D (FIG. 5). This result means that the portion D was a portion corresponding to the resin skeleton, and that cobalt derived from the electrolyte solution was trapped in the portion C in the form of cobalt ions without being precipitated. The portions that trapped cobalt ions are thought to be heteroatoms present in the porous epoxy resin membrane. These heteroatoms selectively trap ions of metals, such as transition metals (e.g., Co, Mn, Cu), Al, Sn, and Si, which tend to form a complex. In addition, since the charge and discharge of the battery were performed without any problem, it is inferred that the heteroatoms hardly trap Li ions in the battery. From the foregoing, it is thought that the porous epoxy resin membrane of Example 1 is less adversely affected by metal ions, and contributes to the stability of the electricity storage device.

INDUSTRIAL APPLICABILITY

The nonaqueous electrolyte electricity storage device of the present invention can be suitably used in particular for high-capacity secondary batteries required for vehicles, motorcycles, ships, construction machines, industrial machines, residential electricity storage systems, etc.

**Claims**

1. A nonaqueous electrolyte electricity storage device comprising:

   a cathode;
   an anode;
   a separator disposed between the cathode and the anode; and
   an electrolyte having ion conductivity, wherein
   the cathode and/or the anode is formed of a material containing at least one metal element selected from the group consisting of transition metals, aluminum, tin, and silicon, and
   the separator comprises a porous epoxy resin body having a porous structure with a specific surface area of 5 to 60 m²/g, and the porous epoxy resin body contains at least one amino group selected from the group consisting of a primary amino group, a secondary amino group, and a tertiary amino group.

2. The nonaqueous electrolyte electricity storage device according to claim 1, wherein the cathode and/or the anode is formed of a material containing at least one metal element selected from the group consisting of manganese, nickel, cobalt, iron, copper, and aluminum.

3. A method for producing a nonaqueous electrolyte electricity storage device, the method comprising the steps of:

   preparing a cathode, an anode, and a separator; and
   assembling an electrode group from the cathode, the anode, and the separator, wherein
   the step of preparing the separator comprises the steps of:

      (i) preparing an epoxy resin composition containing an epoxy resin, an amine serving as a curing agent, and a porogen;
      (ii) forming a cured product of the epoxy resin composition into a sheet shape or curing a sheet-shaped formed body of the epoxy resin composition, so as to obtain an epoxy resin sheet; and
      (iii) removing the porogen from the epoxy resin sheet by means of a halogen-free solvent,

   the cathode and/or the anode is formed of a material containing at least one metal element selected from the group consisting of transition metals, aluminum, tin, and silicon, and
   the separator comprises a porous epoxy resin body having a porous structure with a specific surface area of 5

to 60 m$^2$/g, and the porous epoxy resin body contains at least one amino group selected from the group consisting of a primary amino group, a secondary amino group, and a tertiary amino group.

FIG. 1

FIG. 2

FIG. 3

FIG. 4

FIG. 5

## INTERNATIONAL SEARCH REPORT

| | International application No. |
|---|---|
| | PCT/JP2012/003833 |

A. CLASSIFICATION OF SUBJECT MATTER
*H01M2/16*(2006.01)i, *C08J9/26*(2006.01)i, *C08L63/00*(2006.01)i, *H01M2/18*
(2006.01)i

According to International Patent Classification (IPC) or to both national classification and IPC

B. FIELDS SEARCHED

Minimum documentation searched (classification system followed by classification symbols)
H01M2/16, C08J9/26, C08L63/00, H01M2/18

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-038793 A  (Matsushita Electric Industrial Co., Ltd.), 10 February 2005 (10.02.2005), claim 3 (Family: none) | 1-3 |
| Y | JP 2010-077358 A  (Nitto Denko Corp.), 08 April 2010 (08.04.2010), claim 4 (Family: none) | 1-3 |
| Y | WO 2006/073173 A1  (Asahi Kasei Corp., National University Corporation Kyoto Institute of Technology), 13 July 2006 (13.07.2006), paragraph [0012] & US 2008/0210626 A1    & EP 1837365 A1 | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 August, 2012 (23.08.12) | 04 September, 2012 (04.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/003833 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2001-357883 A (Samsung SDI Co., Ltd.),<br>26 December 2001 (26.12.2001),<br>claim 1<br>& US 2002/0015893 A1 & KR 10-2001-0104541 A | 1-2 |
| Y | JP 2002-141046 A (Nitto Denko Corp.),<br>17 May 2002 (17.05.2002),<br>claim 1<br>(Family: none) | 1-2 |
| Y | JP 2007-513474 A (Eveready Battery Co., Inc.),<br>24 May 2007 (24.05.2007),<br>claim 27<br>& US 2005/0112462 A1 & EP 1685612 A<br>& WO 2005/053067 A2 | 1-2 |

Form PCT/ISA/210 (continuation of second sheet) (July 2009)

**EP 2 720 292 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001192487 A

- JP 2000030683 A

### Non-patent literature cited in the description

- **PANKAJ ARORA ; RALPH E. WHITE ; MARC DOYLE.** Capacity Fade Mechanisms and Side Reactions in Lithium-Ion Batteries. *Journal of Electrochemical Society,* October 1998, vol. 145 (10